# EUROPÄISCHE PATENTSCHRIFT

(11) **EP 3 544 176 B1**
(45) Veröffentlichungstag und Bekanntmachung des Hinweises auf die Patenterteilung: **02.08.2023**
(21) Anmeldenummer: 19171545.7
(22) Anmeldetag: 27.10.2016
(51) Int. Cl.: H02S 40/44, H02S 40/42

(54) **KÜHLMODUL FÜR EINE PHOTOVOLTAIKEINHEIT**
COOLING MODULE FOR A PHOTOVOLTAIC UNIT
MODULE DE REFROIDISSEMENT POUR UNE UNITÉ PHOTOVOLTAÏQUE

(30) Priorität: 27.10.2015 DE 102015220984
(43) Veröffentlichungstag der Anmeldung: 25.09.2019
(62) Teilanmeldung aus: 16793791.1
(73) Patentinhaber: ITP GmbH - Gesellschaft für Intelligente Textile Produkte, 09117 Chemnitz (DE)
(72) Erfinder: RICHTER, Klaus, 99425 Weimar (DE); JIMENEZ, Karen, 99423 Weimar (DE); HUSCHKE, Dirk, 99448 Rittersdorf (DE)
(74) Vertreter: Liedtke & Partner Patentanwälte

(56) Entgegenhaltungen:
- DE-B4-102011 014 383
- US-A1- 2005 061 311
- US-A1- 2007 028 960
- US-A1- 2008 073 062
- US-A1- 2008 164 208
- US-A1- 2009 308 433
- US-A1- 2011 297 144
- US-A1- 2014 360 556
- US-B1- 7 956 278

## Beschreibung

Die Erfindung betrifft ein Kühlmodul für eine Photovoltaikeinheit.

Im Stand der Technik sind Kühlmodule für Photovoltaikeinheiten bekannt, die letztere vor Überhitzung schützen und einer Verbesserung eines Wirkungsgrades dienen sollen. Gelegentlich wird die beim Kühlen der Photovoltaikeinheiten abzuführende Wärme mittels eines Fluids abgeführt und genutzt.

Aus US 2014/0360556 A1 sind ein PV-Modul und ein Temperaturregelungssystem bekannt.

Aus US 2008/0073062 A1 sind ein Kühlsystem und ein Verfahren zum Kühlen elektronischer Komponenten bekannt.

Aus US 7,956,278 B1 ist ein Wärmeübertragungsapparat bekannt.

Aus US 2009/0308433 A1 ist ein Solarenergieapparat bekannt.

Aus US 2007/0028960 A1 ist eine Kühlvorrichtung bekannt.

Aus US 2005/0061311 A1 ist ein Solarkollektor-Panel bekannt.

Aus US 2011/0297144 A1 ist ebenfalls ein Solarkollektor bekannt.

Der Erfindung liegt die Aufgabe zu Grunde, ein verbessertes Kühlmodul für eine Photovoltaikeinheit anzugeben.

Die Aufgabe wird erfindungsgemäß gelöst durch die Merkmalskombination gemäß Anspruch 1.

Vorteilhafte Ausgestaltungen der Erfindung sind Gegenstand der Unteransprüche.

Ein Kühlmodul ist für eine Photovoltaikeinheit vorgesehen. Erfindungsgemäß weist das Kühlmodul einen als plattenförmiges 3-D-Textil ausgebildeten Kern auf, welcher als Abstandsgewirke ausgebildet ist, welches von einem Fluid durchströmbar ist. Das Abstandsgewirke weist eine Vielzahl von Polfäden auf, wodurch der plattenförmige Kern und damit das gesamte Kühlmodul eine hohe Festigkeit gegenüber Kräften aufweist, die normal zur Plattenrichtung wirken. Durch die Anordnung eines plattenförmigen als 3-D-Textil ausgebildeten Kerns, welcher als Abstandsgewirke ausgebildet ist, ist ein sehr gut vom Fluid durchströmbares Element gebildet. Dadurch ist das Kühlmodul besonders effektiv und kann besonders homogen Wärme von einer Photovoltaikeinheit ableiten.

Eine Ausgestaltung des Kühlmoduls sieht vor, dass wenigstens eine Oberfläche des Kerns mit einer Beschichtung versehen ist, welche fluiddicht, insbesondere wasserundurchlässig und witterungsbeständig ist. Dadurch wird auf einfache Weise das gut vom Fluid durchströmbare Element gebildet. Bevorzugt sind dabei gemäß einer ersten Alternative beide Oberflächen des Kerns mit der Beschichtung versehen. Dadurch ist mit vergleichsweise geringem Aufwand eine gute Dichtigkeit erzielbar. Gemäß einer zweiten Alternative ist die der Photovoltaikeinheit abgewandte Oberfläche des Kerns mit der Beschichtung versehen und die der Photovoltaikeinheit zugewandte Oberfläche des Kerns ist mit der Photovoltaikeinheit fluiddicht, insbesondere wasserdicht verbunden. Dadurch ist eine besonders effektive Wärmeabführung von der Photovoltaikeinheit direkt zum Fluid ermöglicht, wodurch das Kühlmodul besonders effektiv und baulich vergleichsweise dünn ausführbar ist. Besonders bevorzugt ist eine Beschichtung aus Silikon gebildet und weist einen einschichtigen oder einen mehrschichtigen Aufbau auf. Eine erste, also innere Silikonschicht stellt dabei einen guten Verbund zum Abstandsgewirke her, die zweite, äußere Silikonschicht dient dem Schließen von Öffnungen der ersten Silikonschicht, so dass durch den mehrschichtigen Aufbau der Beschichtung aus Silikon eine besonders zuverlässige Dichtigkeit erzielbar ist.

Erfindungsgemäß ist vorgesehen, dass Randflächen des Kerns mit jeweils einer Einfassung versehen sind, welche fluidundurchlässig sind. Dadurch ist auf einfache Weise das geschlossene Element herstellbar.

Bevorzugt weist dabei eine Anzahl der Einfassungen jeweils einen u-förmigen Querschnitt auf. Dieser u-förmige Querschnitt weist jeweils einen randparallelen Steg und jeweils zwei parallele Flansche auf, deren innerer Abstand mit der Dicke des Kerns mit der ein- oder beidseitigen Beschichtung korrespondiert. Besonders bevorzugt sind Innenflächen der beiden parallelen Flansche zumindest bereichsweise mit äußeren Oberflächen der beidseitigen Beschichtungen jeweils fluiddicht verbunden. Dadurch ist auf einfache Weise eine zuverlässige Dichtigkeit des geschlossenen Elementes zu bewirken.

Besonders bevorzugt sind dabei an zwei gegenüberliegenden Randflächen des Kerns Einfassungen derart angeordnet, dass jeweils der Steg der Einfassung von der korrespondierenden seitlichen Randfläche derart beabstandet ist, dass von der seitlichen Randfläche und der korrespondierenden Einfassung ein Hohlraum gebildet ist. Dieser Hohlraum ist von dem Fluid parallel zur seitlichen Randfläche durchströmbar. Dadurch ist ein besonders effektiver Kanal bildbar, der zu einer Querverteilung des Fluids verwendbar ist, bevor und/oder nachdem der Kern vom Fluid längsdurchströmt wurde. Die Strömung bei der Querverteilung des Fluids parallel zur seitlichen Randfläche im genannten Kanal ermöglicht, dass die Durchströmung durch den als Abstandsgewirke ausgebildeten Kern sehr homogen, also sehr gleichmäßig mit weitgehend konstantem Volumenstrom erfolgt. Das Kühlmodul ermöglicht dadurch eine flächig gleichmäßige und damit sehr effektive Abführung von Wärme der Photovoltaikeinheit. Dadurch ist das Kühlmodul vergleichsweise dünn ausbildbar und vergleichsweise kostengünstig herstellbar.

Besonders bevorzugt ist dabei an einer ersten Einfassung eine Anzahl von Zuläufen und an der der ersten Einfassung gegenüberliegenden zweiten Einfassung eine Anzahl von Abläufen angeordnet. Je größer die Anzahl der Zu- bzw. Abläufe ist, desto kleiner kann der jeweilige Hohlraum ausgebildet sein, um eine ausreichende Querverteilung des Fluids zu ermöglichen. Besonders bevorzugt sind jeweils zwei Zu- und Abläufe jeweils normal zum Kühlmodul angeordnet und als Rohre zum Anschluss einer Fluidleitung ausgebildet. Vorzugsweise sind die Zu- und Abläufe jeweils mit einem Außengewinde versehen.

Eine Weiterbildung sieht vor, dass an zwei anderen, ebenfalls gegenüberliegenden Randflächen angeordnete Einfassungen derart angeordnet sind, dass jeweils der Steg an der korrespondierenden seitlichen Randfläche, welche in Längsströmungsrichtung liegt, anliegt. Dadurch kann zwischen der seitlichen Randfläche und der korrespondierenden Einfassung das Fluid nicht parallel zu dieser seitlichen Randfläche strömen, wodurch in Längsströmungsrichtung das Fluid ausschließlich durch den Kern strömen kann. Dadurch ist eine besonders homogene Durchströmung in Längsrichtung auf einfache Weise ermöglicht.

Eine Anzahl der Einfassungen ist bevorzugt aus Aluminium gebildet, wodurch das Kühlmodul mit einem geringen Gewicht und hoher Genauigkeit herstellbar ist.

Bevorzugt sind dabei Eckstöße von zwei benachbarten Einfassungen jeweils wasserdicht ausgebildet, beispielsweise verklebt oder mittels eines fluiddichten Eckelements verbunden. Dadurch ist das geschlossene Element umfassend abdichtbar. Alternativ kann eine Einfassung mit stirnseitigem Eckelement oder mit zwei stirnseitigen Eckelementen einstückig ausgebildet sein.

Eine besondere Ausgestaltung des Kühlmoduls sieht vor, dass eine den Kern und die Beschichtungen durchdringende Aussparung vorgesehen ist, welche derart ausgebildet ist, dass das Fluid nicht austreten kann. Dieser zwischen den gegenüberliegenden Beschichtungen angeordnete fluiddichte Durchgang durch den Kern dient zur Durchführung von elektrischen Leitungen der zugehörigen Photovoltaikeinheit. Dieser Durchgang ist bevorzugt neben einer der Einfassungen angeordnet, die Zu- oder Abläufe aufweist. Dadurch ist es möglich, eine Photovoltaikeinheit auf der oberen Beschichtung anzuordnen und eine sogenannte Junction-Box, welche der elektrischen Verbindung dient, unter der unteren Beschichtung anzuordnen, wobei elektrische Leitungen von der Photovoltaikeinheit zur Junction-Box durch das Kühlmodul durchführbar sind. Anders als im Stand der Technik ist es dadurch möglich, die Photovoltaikeinheit vollflächig und vollständig, mithin gleichmäßig, zu kühlen. Insbesondere ist eine Photovoltaikeinheit im Bereich einer Junction-Box nicht nur ausbildbar, sondern auch effizient kühlbar.

Ausführungsbeispiele der Erfindung werden im Folgenden anhand von Zeichnungen näher erläutert.

Darin zeigen:
- Figur 1: eine schematische Draufsicht auf eine erste Ausführungsform des erfindungsgemäßen Kühlmoduls,
- Figur 2: einen zugehörigen schematischen Querschnitt,
- Figur 3: einen zugehörigen schematischen Längsschnitt,
- Figur 4: eine perspektivische Explosionsdarstellung einer zweiten Ausführungsform des erfindungsgemäßen Kühlmoduls,
- Figur 5: eine schematische Schnittdarstellung eines Ausschnittes eines erfindungsgemäßen Kühlmoduls und
- Figur 6: eine schematische, perspektivische Darstellung eines oberen Durchgangselementes.

Einander entsprechende Teile sind in allen Figuren mit den gleichen Bezugszeichen versehen.

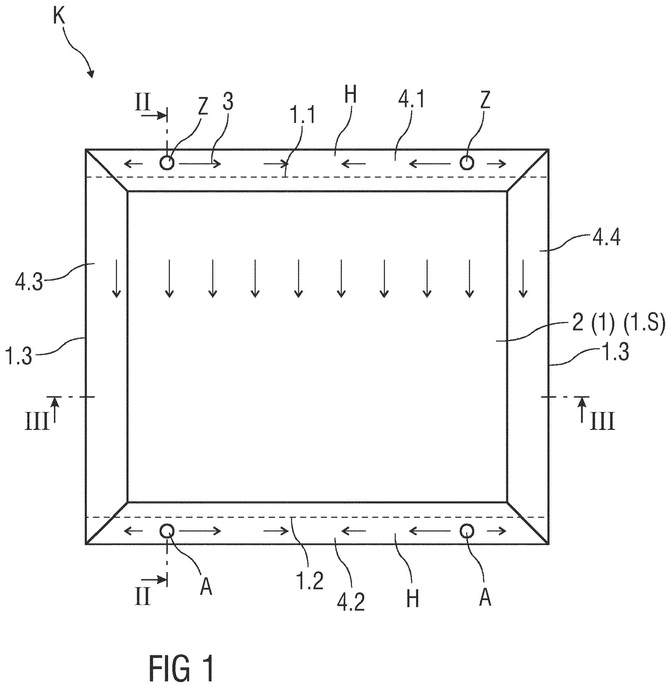

**Figur 1** zeigt eine schematische Draufsicht auf eine Ausführungsform eines erfindungsgemäßen Kühlmoduls K. Das Kühlmodul K umfasst einen plattenförmigen Kern 1, der 3-D-Textil als Abstandsgewirke ausgebildet ist. Der Kern 1 weist eine Vielzahl von Polfäden auf und ist beidseitig, also an beiden seiner parallelen Oberflächen 1. S, mit einer wasserundurchlässigen zweischichtigen Beschichtung 2 aus Silikon versehen.

Der plattenförmige Kern 1weist eine erste Randfläche 1.1, eine zweite Randfläche 1.2, eine dritte Randfläche 1.3 sowie eine vierte Randfläche 1.4 auf, an denen jeweils korrespondierend eine erste Einfassung 4.1, eine zweite Einfassung 4.2, eine dritte Einfassung 4.3 sowie eine vierte Einfassung 4.4 angeordnet ist.

Sämtliche Einfassungen 4.1, 4.2, 4.3, 4.4 weisen jeweils einen in den folgenden Figuren genauer dargestellten u-förmigen Querschnitt mit jeweils einem hier nicht gezeigten randparallelen Steg S und jeweils zwei hier ebenfalls nicht gezeigte parallele Flansche F auf und sind aus Aluminium gefertigt. Die Einfassungen 4.1, 4.2, 4.3, 4.4 sind selbst wasserdicht und mit der Beschichtung 2 wasserdicht verbunden. Die mittels einer Gehrung ausgebildeten Eckverbindungen jeweils benachbarter Einfassungen 4.1, 4.2, 4.3, 4.4 sind nicht nur mechanisch fest, sondern ebenfalls wasserdicht ausgeführt.

An den beiden gegenüberliegenden ersten und zweiten Randflächen 1.1, 1.2 sind korrespondierende erste und zweite Einfassungen 4.1, 4.2 derart angeordnet, dass jeweils der hier nicht bezeichnete Steg S von der korrespondierenden seitlichen Randfläche 1.1, 1.2 derart beabstandet ist, dass ein Hohlraum H gebildet ist, der von einem Fluid 3 im Wesentlichen parallel zur seitlichen Randfläche 1.1, 1.2 durchströmbar ist. Die Fließrichtung des Fluids 3 ist durch Pfeile dargestellt, wobei die Pfeillänge schematisch mit der Größe des Volumenstroms korrespondierend dargestellt ist.

An den beiden gegenüberliegenden dritten und vierten Randflächen 1.3, 1.4 sind dritte und vierte Einfassungen 4.3, 4.4 derart angeordnet, dass jeweils der hier nicht dargestellte Steg S an der korrespondierenden seitlichen Randfläche 1.3, 1.4 anliegt.

An der ersten Einfassung 4.1 sind normal zur Plattenebene zwei hülsenförmige Zuläufe Z angeordnet und an der der ersten Einfassung 4.1 gegenüberliegenden zweiten Einfassung 4.2 sind normal zur Plattenebene zwei hülsenförmige Abläufe A angeordnet. An die Zuläufe Z sowie an die Abläufe A sind Leitungen für das Kühlfluid anschließbar.

Das über die beiden Zuläufe Z in den oben dargestellten Hohlraum H einströmende Fluid 3 verteilt sich zunächst im Wesentlichen quer in selbigem und strömt in Richtung der mittig dargestellten Pfeilgruppe sehr gleichmäßig parallel zu der dritten und der vierten Randfläche 1.3, 1.4 durch den Kern 1. In dieser Längsströmungsrichtung strömt das Fluid ausschließlich durch den Kern 1, wodurch die besonders homogene Durchströmung auf einfache Weise ermöglicht ist.

Nach Durchströmung des Kerns 1 in Längsrichtung trifft das Fluid 3 in den unten dargestellten Hohlraum H, in welchem es im Wesentlichen quer, also horizontal, zu den Abläufen A strömt, aus welchen es anschließend in eine nicht dargestellte Leitung strömt.

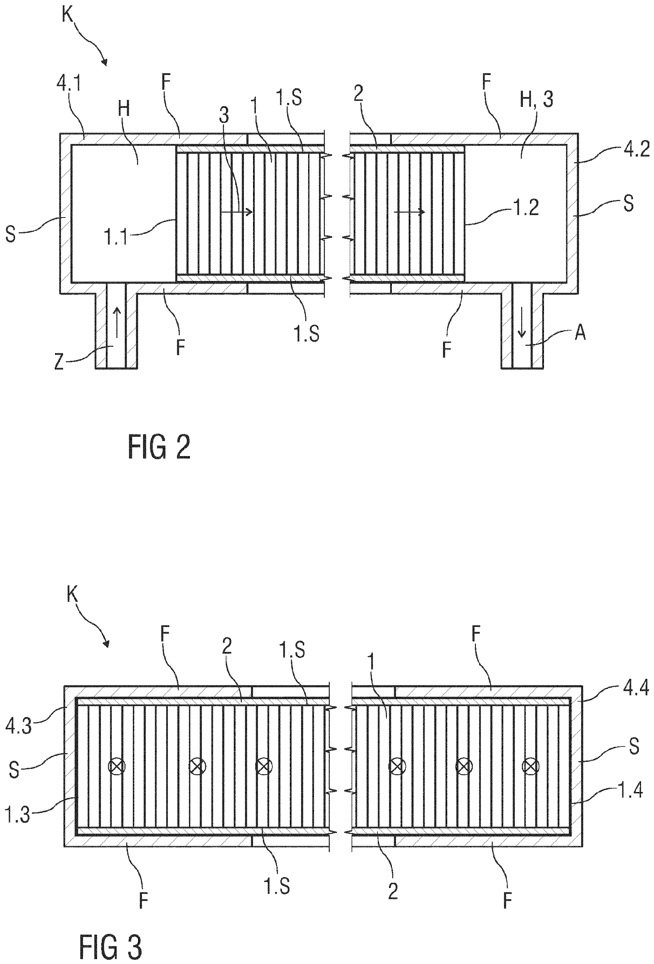

**Figur 2** zeigt einen zu Figur 1 gehörigen schematischen Querschnitt des Kühlmoduls K. Die links dargestellte erste Einfassung 4.1 und die rechts dargestellte zweite Einfassung 4.2 weisen jeweils den vorgenannten u-förmigen Querschnitt mit jeweils einem randparallelen Steg S und jeweils zwei parallelen Flanschen F auf.

Die Innenflächen der Flansche F sind wasserdicht jeweils mit der korrespondierenden äußeren Oberfläche der Beschichtung 2, welche auf jeder der Oberflächen 1.S angeordnet ist, verbunden. Der Steg S jeder Einfassung 4.1 und 4.2 ist von der jeweils korrespondierenden seitlichen Randfläche 1.1, 1.2 beabstandet, so dass der vorgenannte Hohlraum H gebildet ist, der von dem Fluid 3 im Wesentlichen parallel zur seitlichen Randfläche 1.1, 1.2 durchströmbar ist, bevor bzw. nachdem das Fluid 3 den Kern 1 in dargestellter Pfeilrichtung von links nach rechts durchströmt.

An der Unterseite der ersten Einfassung 4.1 ist einer der hülsenförmigen Zuläufe Z dargestellt; an der Unterseite der zweiten Einfassung 4.2 ist einer der hülsenförmigen Abläufe A dargestellt.

**Figur 3** zeigt einen zu den Figuren 1 und 2 gehörigen schematischen Längsschnitt des Kühlmoduls K. Die links dargestellte dritte Einfassung 4.3 und die rechts dargestellte vierte Einfassung 4.4 weisen ebenfalls jeweils den vorgenannten u-förmigen Querschnitt mit jeweils einem randparallelen Steg S und jeweils zwei parallelen Flanschen F auf.

Die Innenflächen dieser Flansche F sind ebenfalls wasserdicht jeweils mit der korrespondierenden äußeren Oberfläche der Beschichtung 2, welche auf jeder der Oberflächen 1.S angeordnet ist, verbunden. Der Steg S jeder Einfassung 4.3 und 4.4 liegt an der jeweils korrespondierenden seitlichen Randfläche 1.3, 1.4 unmittelbar an, so dass das Fluid 3 im Bereich des Kerns 1 im Wesentlichen parallel zu den seitlichen Randfläche 1.3, 1.4 strömen kann; dies ist schematisch durch fünf Pfeilenden dargestellt.

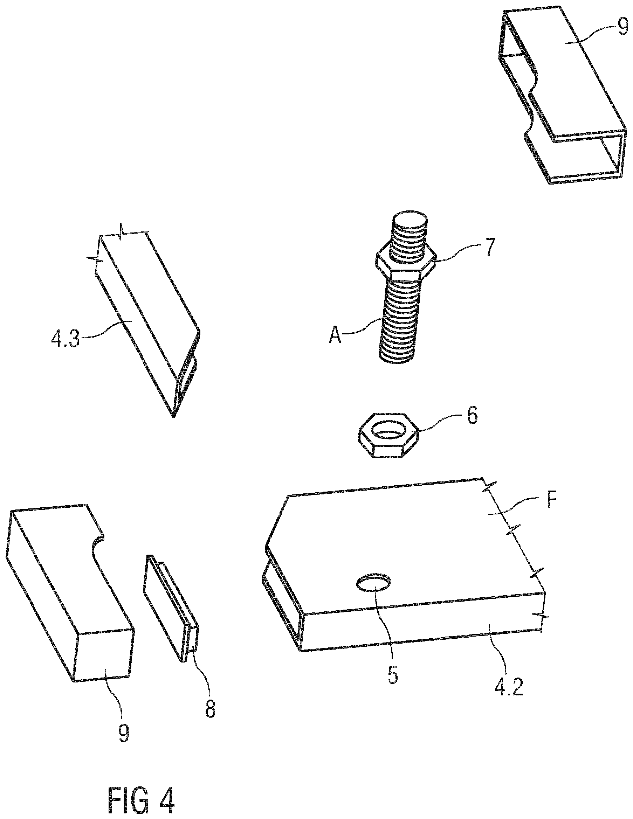

**Figur 4** zeigt einen Ausschnitt einer perspektivischen Explosionsdarstellung einer zweiten Ausführungsform des erfindungsgemäßen Kühlmoduls K. Dargestellt ist schematisch, wie die zweite Einfassung 4.2 mit der dritten Einfassung 4.3 zu verbinden ist und wie die zweite Einfassung 4.2 und die dritte Einfassung 4.3 dazu ausgebildet sind. Die zweite Einfassung 4.2 und die dritte Einfassung 4.3 weisen im Verbindungsbereich eine Gehrung auf.

Die Breite des Flansches F der zweiten Einfassung 4.2 ist größer als die der dritten Einfassung 4.3 und weist eine Bohrung 5 auf, an welche der Ablauf A, welcher als Gewinderohr ausgebildet ist, anschließbar ist. Gemäß einer ersten Alternative wird dazu eine erste Mutter 6 auf der Oberseite des Flansches F der zweiten Einfassung 4.2 wasserdicht befestigt; anschließend wird der als Gewinderohr ausgebildete Ablauf A in diese erste Mutter 6 wasserdicht eingeschraubt. Eine zweite Mutter 7 dient zum Kontern und damit zur Befestigung des Ablaufs A in der ersten Mutter 6. Gemäß einer zweiten Alternative wird die erste Mutter 6 unterhalb des Flansches F und die zweite Mutter 7 oberhalb des Flansches F angeordnet und bei eingeschraubtem Ablauf A gegeneinander verschraubt; dabei wird der Ablauf A wasserdicht mit der zweiten Einfassung 4.2 verbunden.

Mittels eines Stopfens 8 wird oder ist eine stirnseitige Öffnung der zweiten Einfassung 4.2 wasserdicht verschlossen, beispielsweise wird der Stopfen 8 wasserdicht eingeklebt. Mittels eines Eck-Schuhs 9, welcher zum besseren Verständnis in zwei Ansichten dargestellt ist, wird oder ist der aus der an die zweite Einfassung 4.2 angesetzte dritte Einfassung 4.3 gebildete Eckbereich einschließlich Stopfen 8 überdeckt. Dazu ist die Innenbreite des Eck-Schuhs 9 geringfügig größer als die Außenbreite der zweiten Einfassung 4.2 und der dritten Einfassung 4.3. Durch die Überdeckung ist die derart ausgebildete Ecke zwischen zweiter Einfassung 4.2 und dritter Einfassung 4.3 auf einfache Weise mechanisch stabil herstellbar. Zur Herstellung der Wasserdichtigkeit wird der Eck-Schuh 9 bevorzugt aufgeklebt.

Die drei weiteren, hier nicht gezeigten Eckbereiche des hier nur ausschnittsweise gezeigten Kühlmoduls K, welches neben zwei Abläufen A auch zwei korrespondierende Zuläufe Z umfasst, sind analog ausgebildet. Der hier nicht gezeigte Kern 1 mit den hier nicht gezeigten Beschichtungen 2 ist wie in den vorgenannten Figuren beschrieben ausgebildet und wird von den Einfassungen 4.1 bis 4.4 wasserdicht eingefasst.

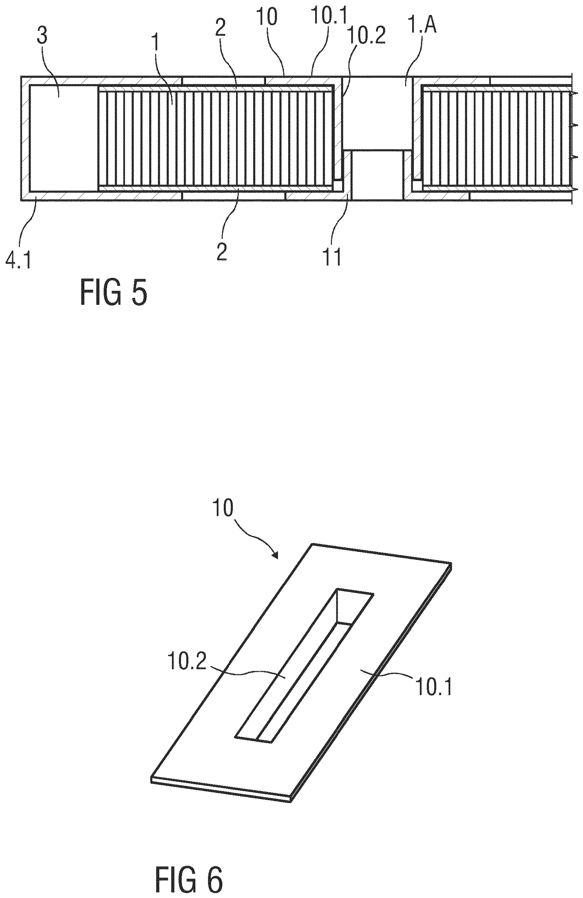

**Figur 5** zeigt eine schematische Schnittdarstellung eines Ausschnittes eines erfindungsgemäßen Kühlmoduls K mit einer Aussparung 1.A, die der Durchführung elektrischer Kabel einer Photovoltaikeinheit dient. Die Aussparung 1.A im Kern 1 ist derart ausgebildet, dass das Fluid 3 nicht austreten kann. Dazu ist ein oberes Durchgangselement 10 mit einem unteren Durchgangselement 11 wasserdicht verbunden. Das obere Durchgangselement 10 ist zudem wasserdicht mit der oberen Beschichtung 2 verbunden. Das untere Durchgangselement 11 ist wasserdicht mit der unteren Beschichtung 2 verbunden.

Dazu weist das obere Durchgangselement 10, das in **Figur 6** perspektivisch dargestellt ist, einen plattenförmigen Oberflansch 10.1 auf, welcher unterseitig mit der Oberseite der oberen Beschichtung 2 verklebt ist. Das obere Durchgangselement 10 weist zudem einen Kragen 10.2 auf, in welchen ein korrespondierender Kragen des unteren Durchgangselementes 11 einsteckbar und wasserdicht verklebbar ist. Das untere Durchgangselement 11 weist einen plattenförmigen Flanschbereich auf, welcher oberseitig mit der Unterseite der unteren Beschichtung 2 verklebt ist.

Das Kühlmodul K weist bevorzugt eine Länge von 1000 mm bis 2000 mm, besonders bevorzugt von 1500 mm auf. Die bevorzugte Breite beträgt 600 mm bis 1000 mm, besonders bevorzugt 800 mm. Die bevorzugte Dicke beträgt 6 mm bis 10 mm, besonders bevorzugt 8 mm. Mehrere Kühlmodule K, insbesondere solche mit den Standard-Abmessungen von 1500 mm x 800 mm x 8 mm, sind miteinander verbindbar, um größere Module zu bilden.

Vorzugsweise betragen die Durchmesser der Zuläufe Z und der Abläufe A zwischen 3/8 Zoll und 1 Zoll.

Bevor das Kühlmodul K auf die korrespondierende Photovoltaik-Einheit aufgebracht wird, wird dieses einer Qualitätsprüfung unterzogen. Das Kühlmodul K wird dazu zunächst drucklos mit einem offenen System und anschließend mit einem geschlossenen System mit einem Druck von 3 bar geprüft.

### BEZUGSZEICHENLISTE

- 1: Kern
1.A Aussparung
1.S Oberfläche
1.1 erste Randfläche
1.2 zweite Randfläche
1.3 dritte Randfläche
1.4 vierte Randfläche
- 2: Beschichtung
- 3: Fluid
- 4.1: erste Einfassung
- 4.2: zweite Einfassung
- 4.3: dritte Einfassung
- 4.4: vierte Einfassung
- 5: Bohrung
- 6: erste Mutter
- 7: zweite Mutter
- 8: Stopfen
- 9: Eck-Schuh
- 10: oberes Durchgangselement
10.1 Oberflansch
10.2 Kragen
- 11: unteres Durchgangselement

- A: Ablauf
- F: Flansch
- H: Hohlraum
- K: Kühlmodul
- S: Steg
- Z: Zulauf

## Patentansprüche

1. Kühlmodul (K) für einePhotovoltaikeinheit, welche an einer Rückseite der Photovoltaikeinheit montierbar ist,
**gekennzeichnet durch** einen als plattenförmiges 3-D-Textil ausgebildeten Kern (1), wobei der Kern zwei Oberflächen hat und als Abstandsgewirke mit einer Vielzahl von Polfäden ausgebildet ist,
welches von einem Fluid (3) durchströmbar ist,
wobei der Kern mit einer der Oberflächen der Photovoltaikeinheit zugewandt werden kann zum Abführen von Wärme von der Photovoltaikeinheit, wobei beide Oberflächen des Kerns mit einer fluiddichten Beschichtung (2) versehen sind oder wobei die der Photovoltaikeinheit abgewandte Oberfläche des Kerns mit einer fluiddichten Beschichtung (2) versehen ist und die der Photovoltaikeinheit zugewandte Oberfläche des Kerns mit der Photovoltaikeinheit fluiddicht verbindbar ist, wobei Randflächen (1.1, 1.2, 1.3, 1.4) des Kerns (1) mit jeweils einer Einfassung (4.1, 4.2, 4.3, 4.4) versehen sind, welche fluidundurchlässig sind.

2. Kühlmodul (K) nach Anspruch 1,
**dadurch gekennzeichnet, dass** eine Anzahl der Einfassungen (4.1, 4.2, 4.3, 4.4) jeweils einen u-förmigen Querschnitt mit jeweils einem randparallelen Steg (S) und jeweils zwei parallelen Flanschen (F) aufweist.

3. Kühlmodul (K) nach Anspruch 2,
**dadurch gekennzeichnet, dass** an zwei gegenüberliegenden Randflächen (1.1, 1.2) angeordnete Einfassungen (4.1, 4.2) derart angeordnet sind, dass jeweils der Steg (S) von der korrespondierenden seitlichen Randfläche (1.1, 1.2) derart beabstandet ist, dass von der seitlichen Randfläche (1.1, 1.2) und der korrespondierenden Einfassung (4.1, 4.2) ein Hohlraum (H) gebildet ist, der von dem Fluid (3) parallel zur seitlichen Randfläche (1.1, 1.2) durchströmbar ist.

4. Kühlmodul (K) nach Anspruch 2 oder 3,
**dadurch gekennzeichnet, dass** an zwei gegenüberliegenden Randflächen (1.3, 1.4) angeordnete Einfassungen (4.3, 4.4) derart angeordnet sind, dass jeweils der Steg (S) an der korrespondierenden seitlichen Randfläche (1.3, 1.4) anliegt.

5. Kühlmodul (K) nach einem der Ansprüche 1 bis 4,
**dadurch gekennzeichnet, dass** eine Anzahl der Einfassungen (4.1, 4.2, 4.3, 4.4) aus Aluminium oder aus Kunststoff gebildet sind.

6. Kühlmodul (K) nach einem der Ansprüche 1 bis 5,
**dadurch gekennzeichnet, dass** Eckstöße von zwei benachbarten Einfassungen (4.1, 4.2, 4.3, 4.4) jeweils wasserdicht ausgebildet sind.

7. Kühlmodul (K) nach einem der Ansprüche 3 bis 6,
**dadurch gekennzeichnet, dass** an einer ersten Einfassung (4.1) eine Anzahl von Zuläufen (Z) angeordnet ist und dass an der der ersten Einfassung (4.1) gegenüberliegenden zweiten Einfassung (4.2) eine Anzahl von Abläufen (A) angeordnet ist.

8. Kühlmodul (K) nach einem der Ansprüche 1 bis 7,
**dadurch gekennzeichnet, dass** die wenigstens eine Beschichtung (2) ein- oder mehrschichtig und aus Silikon gebildet ist.

9. Kühlmodul (K) nach einem der Ansprüche 1 bis 8, **gekennzeichnet durch** eine den Kern 1 und die Beschichtungen (2) durchdringende Aussparung (1.A), welche derart ausgebildet, dass das Fluid (3) nicht austreten kann.

## Claims

1. Cooling module (K) for a photovoltaic unit which is mountable on a rear side of the photovoltaic unit, **characterized by** a core (1) which is in the form of a plate-like 3D textile, wherein the core has two surfaces and is designed as a spacer knit with a multiplicity of pole threads through which spacer knit a fluid (3) is flowable, wherein one of the surfaces of the core can be made to face the photovoltaic unit in order to remove heat from the photovoltaic unit, wherein the two surfaces of the core are provided with a fluid-tight coating (2), or wherein that surface of the core which faces away from the photovoltaic unit is provided with a fluid-tight coating (2) and that surface of the core which faces the photovoltaic unit is connectable in a fluid-tight manner to the photovoltaic unit, wherein edge surfaces (1.1, 1.2, 1.3, 1.4) of the core (1) are each provided with an enclosure (4.1, 4.2, 4.3, 4.4), said enclosures being fluid-impermeable.

2. Cooling module (K) according to Claim 1, **characterized in that** a number of the enclosures (4.1, 4.2, 4.3, 4.4) each has a U-shaped cross section, having in each case an edge-parallel web (S) and in each case two parallel flanges (F).

3. Cooling module (K) according to Claim 2, **characterized in that** enclosures (4.1, 4.2) arranged on two opposite edge surfaces (1.1, 1.2) are arranged such that the web (S) is in each case spaced apart from the corresponding lateral edge surface (1.1, 1.2) in such a manner that a cavity (H) is formed by the lateral edge surface (1.1, 1.2) and the corresponding enclosure (4.1, 4.2), through which cavity the fluid (3) is flowable parallel to the lateral edge surface (1.1, 1.2).

4. Cooling module (K) according to Claim 2 or 3, **characterized in that** enclosures (4.3, 4.4) arranged on two opposite edge surfaces (1.3, 1.4) are arranged in such a manner that the web (S) in each case lies against the corresponding lateral edge surface (1.3, 1.4).

5. Cooling module (K) according to one of Claims 1 to 4,
**characterized in that** a number of the enclosures (4.1, 4.2, 4.3, 4.4) are formed from aluminium or from plastic.

6. Cooling module (K) according to one of Claims 1 to 5,
**characterized in that** corner joints of two adjacent enclosures (4.1, 4.2, 4.3, 4.4) are each formed in a water-tight manner.

7. Cooling module (K) according to one of Claims 3 to 6,
**characterized in that** a number of inlets (Z) is arranged on a first enclosure (4.1), and **in that** a number of outlets (A) is arranged on the second enclosure (4.2) which lies opposite the first enclosure (4.1).

8. Cooling module (K) according to one of Claims 1 to 7,
**characterized in that** the at least one coating (2) is formed in a single layer or multiple layers and from silicone.

9. Cooling module (K) according to one of Claims 1 to 8, **characterized by** a recess (1.A) which penetrates the core (1) and the coatings (2) and is designed in such a manner that the fluid (3) cannot escape.

## Revendications

1. Module de refroidissement (K) pour une unité photovoltaïque, qui peut être monté sur une face arrière de l'unité photovoltaïque,
**caractérisé par** un noyau (1) réalisé sous la forme d'un textile 3D en forme de plaque, le noyau présentant deux surfaces et étant réalisé sous la forme d'un tricot d'espacement qui comporte une pluralité de fils de pôle et peut être traversé par un fluide (3),
l'une des surfaces du noyau pouvant être tournée vers l'unité photovoltaïque pour évacuer la chaleur de l'unité photovoltaïque, les deux surfaces du noyau étant pourvues d'un revêtement (2) étanche aux fluides, ou la surface du noyau qui est opposée à l'unité photovoltaïque étant pourvue d'un revêtement (2) étanche aux fluides et la surface du noyau qui est tournée vers l'unité photovoltaïque pouvant être reliée à l'unité photovoltaïque de manière étanche aux fluides, des surfaces de bord (1.1, 1.2, 1.3, 1.4) du noyau (1) étant respectivement pourvues d'une bordure (4.1, 4.2, 4.3, 4.4) qui est imperméable aux fluides.

2. Module de refroidissement (K) selon la revendication 1,
**caractérisé en ce qu'**un certain nombre des bordures (4.1, 4.2, 4.3, 4.4) présentent respectivement une section transversale en forme de U ayant respectivement une nervure (S) parallèle au bord et respectivement deux brides parallèles (F).

3. Module de refroidissement (K) selon la revendication 2,
**caractérisé en ce que** des bordures (4.1, 4.2) disposées sur deux surfaces de bord (1.1, 1.2) opposées sont disposées de telle sorte que la nervure (S) soit respectivement espacée de la surface de bord (1.1, 1.2) latérale correspondante afin qu'un espace creux (H) pouvant être traversé par le fluide (3) parallèlement à la surface de bord latérale (1.1, 1.2) soit formé par la surface de bord latérale (1.1, 1.2) et la bordure correspondante (4.1, 4.2).

4. Module de refroidissement (K) selon la revendication 2 ou 3,
**caractérisé en ce que** des bordures (4.3, 4.4) disposées sur deux surfaces de bord (1.3, 1.4) opposées sont disposées de telle sorte que la nervure (S) s'applique respectivement contre la surface de bord (1.3, 1.4) latérale correspondante.

5. Module de refroidissement (K) selon l'une des revendications 1 à 4,
**caractérisé en ce qu'**un certain nombre des bordures (4.1, 4.2, 4.3, 4.4) sont formées d'aluminium ou de matière plastique.

6. Module de refroidissement (K) selon l'une des revendications 1 à 5,
**caractérisé en ce que** des joints d'angle de deux bordures (4.1, 4.2, 4.3, 4.4) voisines sont respectivement réalisés de manière étanche à l'eau.

7. Module de refroidissement (K) selon l'une des revendications 3 à 6,
**caractérisé en ce qu'**un certain nombre d'orifices d'entrée (Z) sont disposés sur une première bordure (4.1) et **en ce qu'**un certain nombre d'orifices de sortie (A) sont disposés sur la deuxième bordure (4.2) opposée à la première bordure (4.1).

8. Module de refroidissement (K) selon l'une des revendications 1 à 7,
**caractérisé en ce que** ledit au moins un revêtement (2) est monocouche ou multicouche et est formé de silicone.

9. Module de refroidissement (K) selon l'une des revendications 1 à 8, **caractérisé par** un évidement (1.A) traversant le noyau (1) et les revêtements (2), qui est configuré de telle sorte que le fluide (3) ne puisse pas s'échapper.
